# EUROPÄISCHE PATENTANMELDUNG

(11) **EP 1 415 887 A2**
(43) Veröffentlichungstag der Anmeldung: **06.05.2004**
(21) Anmeldenummer: 03019904.6
(22) Anmeldetag: 02.09.2003
(51) Int. Cl.: B62D 1/16, B62D 6/00

(54) **Aktives Lenksystem für ein Mehrspur-Fahrzeug**

(30) Priorität: 31.10.2002 DE 10250738
(71) Anmelder: Bayerische Motoren Werke Aktiengesellschaft, 80809 München (DE)
(72) Erfinder: Schnabel, Mark, Dr., 80799 München (DE); Baumgarten, Götz, Dr., 85757 Karlsfeld (DE)

(57) **Zusammenfassung**

Die Erfindung betrifft ein aktives Lenksystem für ein Mehrspur-Fahrzeug, bei dem neben einem vom Fzg.-Fahrer mit seiner Lenkhandhabe (20) letztlich auf einen Rad-Steller mechanisch übertragenen Lenkwinkel (21) ein zusätzlicher Lenkwinkel (26) von einem Stellmotor eingeleitet und an den lenkbaren Fzg.-Rädern umgesetzt werden kann, wobei der Stellmotor von einer elektronischen Steuereinheit (24) unter Berücksichtigung eines den Lenkwinkel-Wunsch (21) des Fahrers repräsentierenden Lenkhandhabe-Signals sowie zumindest einer weiteren Randbedingung geeignet angesteuert wird und hierfür ein von der Lenkhandhabe (20) des Fahrers zum Stellmotor führender Signalpfad (21a,23) vorgesehen ist. Erfindungsgemäß ist im Signalpfad (21a,23) ein elektronisches Lose-Glied (22) oder backlash-Glied (22) vorgesehen; vorzugsweise wird das Lenkhandhabe-Signal über ein sog. Lose-Glied (22) oder backlash-Glied (22) gefiltert an die elektronische Steuereinheit (24) geleitet. Dabei passieren lediglich solche Signale, deren Amplitude ausgehend von einer Ausgangsstellung größer als ein vorgegebener Schwellwert ist, das Lose-Glied (22). Dabei ist das Lenkhandhabe-Signal insbesondere ein Lenkradwinkel-Signal und es wird der zusätzliche Lenkwinkel über ein insbesondere als Planetengetriebe ausgebildetes Überlagerungsgetriebe in das Lenksystem eingeleitet.

## Beschreibung

Die Erfindung betrifft ein aktives Lenksystem für ein Mehrspur-Fahrzeug, bei dem neben einem vom Fzg.-Fahrer mit seiner Lenkhandhabe letztlich auf einen Rad-Steller mechanisch übertragenen Lenkwinkel ein zusätzlicher Lenkwinkel von einem Stellmotor eingeleitet und an den lenkbaren Fzg.-Rädern umgesetzt werden kann, wobei der Stellmotor von einer elektronischen Steuereinheit unter Berücksichtigung eines den Lenkwinkel-Wunsch des Fahrers repräsentierenden Lenkhandhabe-Signals sowie zumindest einer weiteren Randbedingung geeignet angesteuert wird und hierfür ein von der Lenkhandhabe des Fahrers zum Stellmotor führender Signalpfad vorgesehen ist. Zum technischen Umfeld wird beispielshalber auf die nicht vorveröffentlichte deutsche Patentanmeldung 102 32 452.2 verwiesen.

Bei einem konventionellen Lenksystem bspw. eines Personenkraftwagens geht der über einen sog. Radsteller umgesetzte Radlenkwinkel der lenkbaren Vorderräder direkt und eindeutig aus dem vom Fahrer vorgegebenen Lenkradwinkel hervor, zumindest wenn elastische und Hub-Effekte vernachlässigt werden. Bei einem sog. aktiven Lenksystem lässt sich insbesondere über ein sog. Additions-Getriebe oder Überlagerungsgetriebe mit Hilfe eines geeigneten Stellmotors, insbesondere Elektromotors, ein zusätzlicher LenkWinkel überlagern. Bspw. bei Verwendung einer Zahnstangenlenkung resultiert dann der die Zahnstange als Rad-Steller positionierende sog. Ritzelwinkel aus der entsprechend der Übersetzungen im Additionsgetriebe gewichteten Summe von Lenkradwinkel und Lagewinkel des Stellmotors. Damit ist es unter anderem möglich, eine von der Fahrzeuggeschwindigkeit und dem Lenkradwinkel abhängige und somit variable Lenkübersetzung zu realisieren. Wird dabei zum aus der Fahrereingabe resultierenden Radlenkwinkel ein Winkel zugestellt, so wird die Lenkung direkter, wird hingegen ein Winkel weggestellt bzw. subtrahiert, so wird die Lenkung für das Empfinden des Fahrers indirekter.

Da eine feste mechanische Kopplung zwischen dem Lenkrad des Fahrers bzw. allgemein dessen Lenkhandhabe, den lenkbaren Rädern des Fahrzeugs und dem genannten zusätzlichen Stellmotor besteht, wirkt eine Verstell-Bewegung des Stellmotors nicht nur zu den lenkbaren Rädern hin, sondern auch zum Lenkrad bzw. zur Lenkhandhabe des Fzg.-Fahrers. Hält man das Lenkrad fest, so lässt sich das Fahrzeug alleine über den Stellmotor lenken, arretiert man jedoch die lenkbaren Räder, so führt eine Ansteuerung des Stellmotors zu einer entsprechenden Drehbewegung des Lenkrads. Insofern kann also die Rückwirkung des Stellmotors auf das Lenkrad bzw. die Lenkhandhabe des Fahrers von nicht zu vernachlässigendem Einfluss sein.

Bereits erläutert wurde die sog. variable Lenkübersetzung, die mit einem aktiven Lenksystem nach dem Oberbegriff des Patentanspruchs 1 erzielbar ist, wobei genauer die sog. Verstärkung der Lenkübersetzung variabel ist. Ein geringer vom Fahrer vorgegebener Lenkwunsch kann somit in Abhängigkeit von der jeweils aktuellen Verstärkung eine mehr oder weniger große Verstellbewegung am sog. Rad-Steller hervorrufen. Ist nun bspw. die momentane Verstärkung der variablen Lenkübersetzung relativ groß gewählt und wirkt irgendein Impuls auf das Lenkrad (bzw. die Lenkhandhabe) ein, d.h. wird diese(s) abrupt angestoßen, dann entsteht eine Schwingung im Lenksystem, die sich dem Fahrer vor allem durch eine Lenkraddrehschwingung bemerkbar macht. Elastizitäten und Reibung im Lenksystem sowie die Tatsache, dass ein Moment, welches am Ritzel einer Zahnstangenlenkung bzw. allgemein am Rad-Steller aufzubringen ist, um die Zahnstange bzw. den Radsteller zu bewegen und somit die lenkbaren Räder einzuschlagen, größer ist als dasjenige Moment, das an der Eingangswelle des genannten Additions-Getriebes (oder dgl.) erforderlich ist, um die Lenkhandhabe bzw. die Lenkspindel und das Lenkrad zu drehen, stellen die Ursache für diesen Effekt dar.

Diese genannten Lenkraddrehschwingungen dadurch zu verhindern, dass nur die Verstärkung der variablen Lenkübersetzung grundsätzlich ausreichend gering gewählt wird, stellt keine befriedigende Lösung dar, weil sich auf diese Weise insbesondere im niedrigen Fahrgeschwindigkeitsbereich keine ausreichend direkte Übersetzung realisieren lässt. Einen anderen Lösungsansatz für diese Problematik stellt die Verwendung eines sog. Vorhalteglieds im dem Stellmotor zugeordneten Kommandozweig dar. Hierbei wird dessen Stellkommando differenziert und das differenzierte Signal zum Stellkommando addiert, wobei dieser sog. Vorhalteffekt zu einer Anhebung der Phase des Systems führt und damit zur Stabilisierung genutzt werden kann. Anstelle des Stellkommandos des Stellmotors kann im übrigen auch das Lenkradwinkel-Signal differenziert und zum Stellkommando addiert werden, wobei vorteilhafterweise der Vorhalteffekt in diesem Fall stärker ist.

Es hat sich jedoch gezeigt, dass der Einsatz eines Vorhaltglieds nicht unproblematisch ist. Simulative und praktische Untersuchungen zeigen, dass mit diesem Ansatz die notwendige Robustheit im System nur schwer erreichbar ist. Veränderte Systemparameter, die nicht nur durch Verschleiß und Alterung entstehen, sondern auch bereits aus verschiedenen Fahrsituationen resultieren, können dazu führen, dass die Unterdrückung der Drehschwingungen nicht weiter gewährleistet ist. Wird das Lenkradwinkel-Signal differenziert, kann es darüber hinaus dazu kommen, dass Störungen verstärkt werden und sich in abrupten Bewegungen des Stellmotors äußern können. Dies ist sowohl hinsichtlich des dem Fahrer am Lenkrad übermittelten Gefühls als auch hinsichtlich der Standzeit des Stellmotors ungünstig. Werden Winkelanteile aus verschiedenen Funktionen addiert und findet die Addition nicht auf Stellkommandoniveau, sondern auf Radlenkwinkelniveau statt, so stehen die Stellkommandoanteile der einzelnen Funktionen nicht getrennt zur Verfügung. Ein Vorhalteglied im Stellkommandozweig wirkt sich damit auf alle Stellkommandoanteile aus. Im Falle von Funktionen, die eine Regelung beinhalten, verlangt diese Tatsache besondere Berücksichtung, da die Eigenschaften des Regelkreises verändert werden und Stabilitätsprobleme auftreten können.

Da somit noch keine günstige Lösung zur Vermeidung der weiter oben geschilderten Problematik bzw. der an einem aktiven Lenksystem nach dem Oberbegriff des Anspruchs hervorgerufenen Lenkraddrehschwingungen vorliegt, ist es Aufgabe der vorliegenden Erfindung, eine Abhilfemaßnahme für diese geschilderte Problematik aufzuzeigen.

Die Lösung dieser Aufgabe ist dadurch gekennzeichnet, dass im Signalpfad ein elektronisches Lose-Glied oder backlash-Glied vorgesehen ist. Ein solches Lose-Glied bewirkt quasi "Spiel" oder "Totgang" im Signalpfad Bevorzugt kann dabei das Lenkhandhabe-Signal über ein sog. Lose-Glied oder backlash-Glied gefiltert an die elektronische Steuereinheit geleitet werden. Konkret bzw. in einer bevorzugten Ausführungsform bewirkt ein solches Lose- oder backlash-Glied, dass lediglich solche Signale, deren Amplitude ausgehend von einer Ausgangsstellung größer als ein vorgegebener Schwellwert ist, das Lose-Glied passieren.

Folgende Überlegungen liegen der vorliegenden Erfindung zugrunde: Eine selbsterregte Schwingung kann in einem System nur dann auftreten und sich aufrecht erhalten, wenn ein geschlossener Kreis auftritt, zwischen dessen Elementen sich die Schwingung fortpflanzt. Die Schwingung lässt sich somit dadurch verhindern, dass zwischen mindestens zwei Elementen des Kreises die Fortpflanzung der Schwingung unterdrückt wird. Dies kann u.a. durch eine Bandsperre geschehen, die im Frequenzbereich der Schwingung wirkt. Voraussetzung hierfür ist, dass durch die Sperrung des Bandbereichs die Nutzsignale nicht in relevanter Weise verfälscht werden.

Ist die Amplitude der Schwingung gering im Vergleich zur Amplitude der Nutzgrößen, so lässt sich die Schwingung allerdings auch dadurch beseitigen, dass Signale nur dann durchgelassen werden, wenn ihre Amplitude einen bestimmten Wert überschreiten. Dies gelingt durch eine sog. Lose, deren Prinzip bei mechanischer Umsetzung in der beigefügten Figurenfolge 2a, 2b, 2c dargestellt ist. Dabei sei ein Eingangssignal 1 durch eine seitliche Verschiebung (längs einer Horizontalen 3) eines U-förmigen Bügels 2 repräsentiert, während ein entsprechendes Ausgangssignal 11 durch eine seitliche Verschiebung eines in den U-förmigen Bereich des Bügels 2 hineinragenden Stiftes 12 (längs einer Horizontalen 13) dargestellt wird.

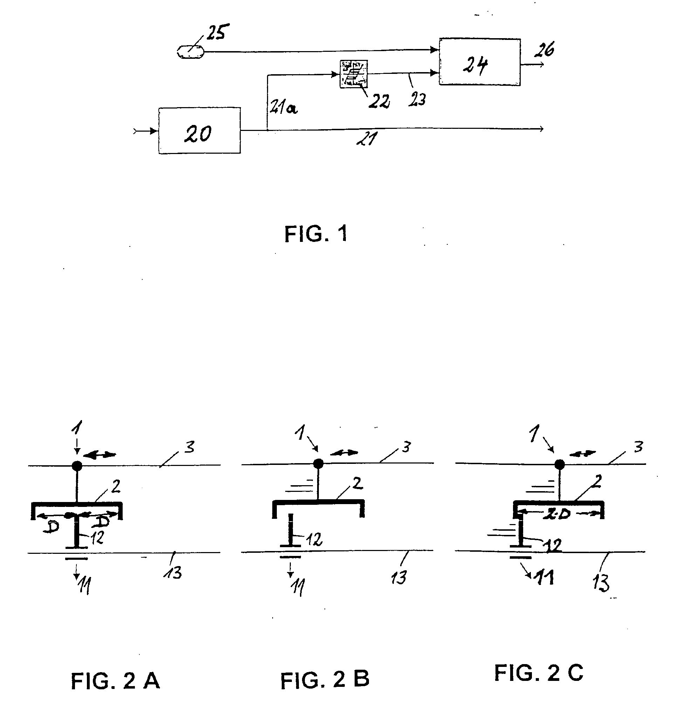

Zunächst befinde sich gemäß Fig.2a der Bügel 2 in seiner Mittelstellung, in welcher der Stift 12 exakt zwischen den um das horizontale Maß 2·D voneinander beabstandeten seitlichen Schenkeln des Bügels 2 liegt. Gemäß Fig.2b liegt (gegenüber Fig.2a) ein relativ geringes Eingangssignal 1 vor, d.h. der Bügel 2 wird seitlich geringfügig ausgelenkt, ohne dass dessen Schenkel am Stift 12 anschlagen, so dass hier das Ausgangssignal 11 gegenüber dem Ausgangssignal 11 aus Fig.2a unverändert ist. Wenn jedoch - wie in Fig.2c dargestellt - das Eingangssignal 1 einen gewissen Schwellwert, nämlich "D" hier ausgehend von der Mittellage, überschreitet, bei dem ein Schenkel des Bügels 2 am Stift 12 zum Anliegen kommt, so wird bei weiter ansteigendem Eingangssignal 1 dieser Stift 12 mitgenommen und ein entsprechend großes Ausgangssignal 11 erzeugt. Solange also das Eingangssignal 1 nur in einem Bereich der Breite 2·D des Bügels 2 variiert, verändert sich das Ausgangssignal 11 nicht. Erst bei größeren Änderungen des Eingangssignals 1 wird das Ausgangssignal 11 entsprechend beeinflusst. Dann wird der Stift 12 durch Bügel 2 dem Eingangssignal 1 entsprechend mitgenommen und verlagert, wobei sich nach geringer Zeit wieder die in Fig.2a dargestellte Mittelstellung des Stiftes 12 (und somit des Ausgangssignals 11) gegenüber dem Bügel 2 (und somit dem Eingangssignal 1) einstellen wird.

Da der Einbau einer soweit anhand der **Figurenfolge 2a - 2c** geschilderten mechanischen Lose zumindest für ein aktives Lenksystem gemäß dem Oberbegriff des Patentanspruchs 1 keine praktikable Lösung darstellt, wird erfindungsgemäß vorgeschlagen, ein elektronisches Lose-Glied oder backlash-Glied vorzusehen, und zwar an einer geeigneten Stelle im Signalpfad zwischen der Lenkhandhabe des Fahrers und dem einen Lenkwinkel an den lenkbaren Fzg.-Rädern einstellenden Stellmotor. Grundsätzlich kann dabei dieses besagte Lose-Glied in der bereits genannten elektronischen Steuereinheit, die ein Bestandteil dieses Signalpfades ist, vorgesehen sein, es kann aber auch das backlash- oder Lose-Glied dieser Steuereinheit bspw. nachgelagert sein.

In einer bevorzugten Ausführungsform wird das Lenkhandhabe-Signal des Fahrers durch ein elektronisches Lose-Glied quasi gefiltert an die elektronische Steuereinheit, welche den Stellmotor ansteuert, weitergeleitet. Dies ist in der beigefügten **Figur 1** symbolisch dargestellt, wobei mit der Bezugsziffer 20 die Lenkhandhabe des Fzg.-Fahrers bezeichnet ist, von der ein Wert für den Lenkwinkel-Wunsch 21 einerseits mechanisch zu einem nicht gezeigten Radsteller zur Umsetzung eines Lenkwinkels an den lenkbaren Fahrzeugrädern geleitet wird und andererseits dieser "Wunsch-Lenkwinkel" 21 über einen abzweigenden Pfad 21 a durch ein Lose-Glied 22 hindurchgeführt wird, von wo aus dieser vom Fahrer vorgegebene und im Lose-Glied 22 entsprechend überarbeitete Lenkwinkel 23 zu einer elektronischen Steuereinheit 24 gelangt. In dieser wird zumindest eine weitere Randbedingung berücksichtigt; hier der Wert für die aktuelle Fahrgeschwindigkeit 25 des Fahrzeugs. Mit der Ausgangsgröße 26 der Steuereinheit 24 wird dann ein nicht dargestellter Stellmotor angesteuert, mit dem an den lenkbaren Fzg.-Rädern zusätzlich zum Lenkwinkel-Wunsch 21 ein weiterer Lenkwinkel eingestellt werden kann, bzw. es kann mittels des Stellmotors dem Lenkwinkel-Wunsch 21 ein geeigneter zusätzlicher Lenkwinkel, der gleichgerichtet oder gegengerichtet sein kann, überlagert werden.

Was das Lose-Glied 22 betrifft, so handelt es sich um eine programmtechnisch auch innerhalb der elektronischen Steuereinheit 24 umsetzbare Funktion, die lediglich Signale oberhalb einer gewissen Amplitude ausgehend von einer sog. Ausgangsstellung, so wie diese in **Fig.2a - 2c** durch den Abstand 2·D der beiden seitlichen Schenkel dargestellt ist, passieren lässt. Bei dieser Ausgangsstellung handelt es sich praktisch um die jeweils aktuelle Stellung des Lose-Glieds bzw. um den aktuellen Wert im Lose-Glied, d.h. gemäß der Figurenfolge 2a - 2c um die Größe des Ausgangssignals 11. Wird gegenüber diesem Wert ein neues Eingangssignal 1 vorgegeben, dass um mehr als die genannte Amplitude oder Schwankungsbreite vom aktuellen Ausgangssignal (Ausgangsstellung) abweicht, so findet dieses neue Eingangssignal Berücksichtigung, andernfalls wird dieses neue Eingangssignal nicht berücksichtigt und geht somit als "Spiel" oder "Totgang" unter.

Bevorzugt handelt es sich beim genannten Lenkhandhabe-Signal um ein Lenkradwinkel-Signal, d.h. um den Drehwinkel des vom Fahrer betätigten Lenkrads, während der genannte zusätzliche Lenkwinkel bevorzugt über ein insbesondere als Planetengetriebe ausgebildetes Überlagerungsgetriebe in das Fzg.-Lenksystem eingeleitet werden kann.

Durch die erfindungsgemäße Filterung des Lenkradwinkelsignals durch ein Lose-Glied können somit Schwingungen in einem sog. aktiven Fzg.-Lenksystem (nach dem Oberbegriff des Anspruchs 1) vermieden werden. Da der Sollwert für den zusätzlichen Lenkwinkel des Stellmotors nicht verändert wird, werden weitere Funktionen, die in der elektronischen Steuereinheit impliziert sind bzw. sein können und die einen Anteil zum an den lenkbaren Rädern umgesetzten Lenkwinkel beitragen, nicht beeinflusst. Dies ist besonders dann von Vorteil, wenn eine solche Funktion eine Regelung enthält, da zusätzliche Glieder im Signalpfad unter anderem auch zu einer Veränderung des Stabilitätsverhaltens führen können.

Die Auslegung des Lose-Glieds hängt ausschließlich von der Amplitude der zu unterdrückenden Schwingung ab. Weil die aufgrund nichtlinearer Effekte hervorgerufene Schwingung bzw. deren Amplitude und Frequenz näherungsweise konstant ist, stellt dieses Vorgehen eine sehr robuste Lösung dar. Die Amplitude der Schwingung des Lenkradwinkelsignals liegt weit unterhalb der Größe von Signaländerungen, die für ggf. weiterhin vorgesehene Fahrstabilisierungs-Funktionen relevant sind. Aus diesem Grund kann das gefilterte Lenkradwinkelsignal ohne Schwierigkeiten auch als Eingangsignal für fahrstabilisierende Funktionen verwendet werden. Durch das Lose-Glied werden zusätzlich Störungen aus dem Lenkradwinkelsignal gefiltert, die zu abrupten Ansteuerungsimpulsen des genannten Stellmotors führen. Daher wird durch die Verwendung des Lose-Glieds die Haptik und Akustik des aktiven Lenksystems verbessert, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Aktives Lenksystem für ein Mehrspur-Fahrzeug, bei dem neben einem vom Fzg.-Fahrer mit seiner Lenkhandhabe letztlich auf einen Rad-Steller mechanisch übertragenen Lenkwinkel (21) ein zusätzlicher Lenkwinkel (26) von einem Stellmotor eingeleitet und an den lenkbaren Fzg.-Rädern umgesetzt werden kann, wobei der Stellmotor von einer elektronischen Steuereinheit (24) unter Berücksichtigung eines den Lenkwinkel-Wunsch (21) des Fahrers repräsentierenden Lenkhandhabe-Signals sowie zumindest einer weiteren Randbedingung geeignet angesteuert wird und hierfür ein von der Lenkhandhabe (20) des Fahrers über die elektronische Steuereinheit (24) zum Stellmotor führender Signalpfad vorgesehen ist,
**dadurch gekennzeichnet, dass** im Signalpfad ein elektronisches Lose-Glied (22) oder backlash-Glied (22) vorgesehen ist.

2. Aktives Lenksystem nach Anspruch 1,
**dadurch gekennzeichnet, dass** das Lenkhandhabe-Signal (21 a) über ein sog. Lose-Glied (22) oder backlash-Glied (22) gefiltert an die elektronische Steuereinheit (24) geleitet wird.

3. Aktives Lenksystem nach Anspruch 1 oder 2,
**dadurch gekennzeichnet, dass** lediglich solche Signale, deren Amplitude ausgehend von einer Ausgangsstellung größer als ein vorgegebener Schwellwert (D) ist, das Lose-Glied (22) passieren.

4. Aktives Lenksystem nach einem der vorangegangenen Ansprüche,
**dadurch gekennzeichnet, dass** das Lenkhandhabe-Signal ein Lenkradwinkel-Signal ist und der zusätzliche Lenkwinkel über ein insbesondere als Planetengetriebe ausgebildetes Überlagerungsgetriebe in das Lenksystem eingeleitet wird.
